(19) Europäisches Patentamt
European Patent Office
Office européen des brevets

(11) **EP 4 060 367 A1**

(12) **EUROPEAN PATENT APPLICATION**

(43) Date of publication:
**21.09.2022   Bulletin 2022/38**

(21) Application number: **21162629.6**

(22) Date of filing: **15.03.2021**

(51) International Patent Classification (IPC):
**G01S 7/02** *(2006.01)*       **G01S 7/41** *(2006.01)*
**G06N 3/02** *(2006.01)*       **G06K 9/62** *(2022.01)*
**G06N 20/00** *(2019.01)*

(52) Cooperative Patent Classification (CPC):
**G01S 7/0234; G01S 7/021; G01S 7/52001;
G06N 3/02; G06N 20/00;** G01S 7/0232;
G01S 7/292; G01S 7/358

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Fraunhofer-Gesellschaft zur Förderung
der angewandten Forschung e.V.
80686 München (DE)**

(72) Inventors:
• **CHARLISH, Alexander
53177 Bonn-Bad Godesberg (DE)**
• **SCHWALM, Carolin
53177 Bonn-Bad Godesberg (DE)**

(74) Representative: **2SPL Patentanwälte PartG mbB
Landaubogen 3
81373 München (DE)**

(54) **METHOD FOR DETERMINING A WAVEFORM MODULATION VECTOR INDICATIVE OF A MODULATED CARRIER SIGNAL USING AN ARTIFICIAL NEURAL NETWORK**

(57)     The present disclosure relates to a concept for estimating a waveform modulation vector 440 indicative of a modulated carrier signal with signal characteristics. A code vector 420 representing real values encoding the signal characteristics of the waveform modulation vector is provided to an artificial neural network 430. The code vector has a dimension smaller than a dimension of the waveform modulation vector 440. The artificial neural network 430 is configured to output the waveform modulation vector 440 based on the code vector 420.

FIG. 4

EP 4 060 367 A1

**Description**

**Field**

The present disclosure relates to methods and apparatuses for determining a waveform modulation vector indicative of a modulated carrier signal. Embodiments also relate to a radar system for determining a waveform modulation vector indicative of a radar signal and to a sonar system for determining a waveform modulation vector indicative of a sonar signal.

**Background**

A waveform modulation vector can be considered as a description of a waveform modulation. The waveform modulation varies phase, frequency, or amplitude of a periodic waveform, called a carrier signal. For this purpose, a baseband signal may modulate the carrier signal, resulting in a modulated carrier signal. The modulated carrier signal can be, for example, a Radio Frequency (RF) signal for radar (radio detection and ranging), a sonic signal for sonar (sound navigation and ranging), or a light signal for lidar (light detection and ranging). For example, a waveform modulation vector can be input to an arbitrary waveform generator (AWG) to generate the modulated carrier signal.

RF signals may be versatilely used, for example, by radio broadcasting, cellular networks, and wireless networking. Different radio devices usually occupy a certain radio frequency band. Thus, an occupation of the radio frequency spectrum can change rapidly over time and vary for different locations. Therefore, it may be desirable for a radar system to adapt the waveform modulation of its radio signal dynamically according to occupied radio frequency bands in varying environments. For example, a radar system can place spectral notches at occupied radio frequency bands to avoid interferences with other users.

Furthermore, dynamic adaption of the radio signal can significantly improve a performance of the radar system. For example, a radar system capable of varying spectral features of the radar signal, such as an energy distribution in a spectral domain, can increase a signal bandwidth and improve range or velocity resolution, while avoiding interference with other spectrum users.

Likewise, a radar system capable of varying ambiguity function features of the radar signal, such as a measurement accuracy of a delay and a Doppler component in the time domain, can adapt to certain environmental conditions.

Determining a suitable waveform modulation vector results in a difficult optimization problem as the waveform modulation affects, for example, a signal phase, an amplitude, and a frequency of the radar signal at any point in time.

Although modern radar systems can vary the waveform modulation on a pulse-to-pulse basis, existing methods for optimizing the waveform modulation vector, such as iterative numerical optimization, are not quick enough to solve the optimization problem in a millisecond or even microsecond timescale. Some of the existing methods limit a number of possible waveform modulations to a small amount of certain waveform modulations. This improves a speed of the methods but, at the same time, restricts a diversity of the waveform modulation as well as dynamics of the radar system.

Therefore, the embodiments aim to provide an improved concept for determining a waveform modulation vector either in a radar system as elaborated before, in a sonar system or another application field using a waveform modulation.

**Summary**

According to a first aspect, the present disclosure relates to a method for determining a waveform modulation vector indicative of a modulated carrier signal with signal characteristics. The method comprises providing a code vector representing real values encoding the signal characteristics of the waveform modulation vector. The code vector has a dimension smaller than a dimension of the waveform modulation vector. The method further comprises feeding the code vector to an artificial neural network to output the waveform modulation vector.

For example, the method can be used in a radar system for optimizing a waveform modulation to achieve the signal characteristics. The skilled person having benefit from the present disclosure will appreciate that embodiments of the present disclosure can also be suitable for a sonar system or another field using waveform modulations.

Specific signal characteristics are desired in specific environmental conditions. These signal characteristics are normally known. Therefore, it can be advantageous to use a code vector that relates to the signal characteristics instead of a code vector that directly relates to the waveform modulation vector. Consequently, it can be easier to find a suitable waveform modulation vector in accordance with the signal characteristics matching a specific task and/or environment. In other words the code vector does not encode the waveform modulation vector itself, instead the code vector encodes signal characteristics which are functions of the waveform modulation.

In some embodiments, the waveform modulation vector may comprise a plurality of discrete samples. The samples, for example complex valued samples, may describe the waveform modulation at discrete points in time. The dimension of the waveform modulation vector can correspond to the number of its samples.

A usage of the artificial neural network can be advantageous because the waveform modulation vector can be determined or estimated fast.

In some embodiments, providing the code vector comprises encoding the signal characteristics by using a predetermined mapping function or a mapping model. Alternatively, the code vector can comprise the signal characteristics themselves. This can avoid a need for a translation between the signal characteristics and the code vector.

Alternatively, providing the code vector can comprise encoding the signal characteristics by using an optimization algorithm.

In some embodiments, the signal characteristics comprise at least one of ambiguity function features, and spectral features of the waveform modulation vector.

As the waveform modulation vector can comprise all possible parameters that can be relevant for the waveform modulation, a diversity of the waveform modulation is not restricted and an arbitrary task imposed by an environment can be addressed.

In some embodiments, the ambiguity function features comprise at least one of Doppler tolerance, desired measurement accuracy, peak sidelobe level, resolution, a set of evaluations of the ambiguity function for delay and Doppler values, correlation of a delay and a Doppler component of the modulated carrier signal, the delay component indicating a distance of a target, the Doppler component indicating a velocity of the target.

In some embodiments, the desired spectral features comprise at least one of a signal bandwidth, locations, extents and depths of spectral notches of the modulated carrier signal, a set of values of a frequency domain representation.

In some embodiments the method further comprises mapping environmental features to the signal characteristics and encoding the signal characteristics into the code vector.

In some embodiments the environmental features comprise at least one of range, velocity, position, type, cross section of objects, location, extent, amplitude of clutter, center frequency, bandwidth of other spectrum users.

The environmental features can also be thought of as waveform optimization parameters, which influence the signal characteristics. For radar, the environmental features can comprise any description of a radar target environment.

In some embodiments, the waveform modulation vector comprises complex numbers describing an envelope of the modulated carrier signal at discrete points in time.

Alternatively, the waveform modulation vector can comprise real values, when describing the envelope partially or assuming frequency, phase, or amplitude of the modulated carrier signal to be constant.

In some embodiments, the waveform modulation vector comprises at least one of in-phase components, quadrature components, phase components, amplitude components, frequency components of the waveform modulation.

In this manner, the waveform modulation vector can either comprise a complete or a partial description of the envelope.

In some embodiments, the artificial neural network comprises a decoder of a variational autoencoder.

In some embodiments, the artificial neural network comprises a generator of a generative adversarial network.

In some embodiments, the method further comprises a training of the artificial neural network. According to the example the training comprises providing training data of at least one input waveform modulation vector and corresponding signal characteristics. According to the example the training further comprises mapping the training data on a corresponding code vector. According to the example the training further comprises generating an output waveform modulation vector based on the corresponding code vector by using the artificial neural network, the output waveform modulation vector translating to output signal characteristics. According to the example the training further comprises adjusting computational weights of the artificial neural network to reduce a difference between the input and the output signal characteristics.

Reducing a difference between the input and the output signal characteristics can be part of a loss function. For example, the loss function can be based on an evidence lower bound or an importance sampling. This can be advantageous because the loss function can serve as a measure to evaluate an accuracy of the artificial neural network.

As the difference between the input and the output signal characteristics can be reduced, the code vector can be structured by signal characteristics, while the code vector still can be used for generating the waveform modulation vector.

In some embodiments, mapping the training data is performed by using an encoder of a variational autoencoder for setting up a probability density function of the corresponding code vector.

Alternatively, mapping the training data can be performed by using the encoder of an ordinary autoencoder or a predetermined encoder.

The variational autoencoder can generate an interpolatable code vector space. So other code vectors not being part of the training can easily be found. This can increase the diversity of the waveform modulation.

In some embodiments, the encoder comprises an artificial neural network with an architecture of a long short-term memory.

A long short-term memory can improve the accuracy of the artificial neural network.

In some embodiments, the method further comprises a training of the artificial neural network. According to the example the training comprises providing training data of at least one input waveform modulation vector and corresponding input signal characteristics. According to the example the training further comprises providing a training code vector by using randomized real values sampled from a predetermined code vector space. According to the example the training further comprises generating an output waveform modulation vector based on the training code vector by using the artificial neural network, the output waveform modulation vector translating to output signal characteristics. According to the example the training further comprises evaluating an accuracy of the artificial neural network by comparing the input and the output signal characteristics. According to the example the training further comprises adjusting computational weights of the artificial neural network based on the accuracy of the artificial neural network.

In some embodiments, evaluating the accuracy is performed by a discriminator of a generative adversarial network.

This can improve the accuracy of the artificial neural network in comparison to the variational autoencoder.

According to a second aspect, the present disclosure relates to an apparatus for determining a waveform modulation vector indicative of a modulated carrier signal with signal characteristics. The apparatus comprises means for providing a code vector representing real values encoding the signal characteristics of the waveform modulation vector. The code vector has a dimension smaller than a dimension of the waveform modulation vector. The apparatus further comprises an artificial neural network to output the waveform modulation vector based on the code vector.

In some embodiments, the apparatus further comprises an arbitrary waveform generator configured to synthetize the modulated carrier signal based on the waveform modulation vector.

According to a further aspect, the embodiments relate to a radar system for determining a waveform modulation vector indicative of a radar signal with signal characteristics. The radar system comprises an input interface configured to provide a code vector representing real values encoding the signal characteristics of the waveform modulation vector, wherein the code vector has a dimension smaller than a dimension of the waveform modulation vector. The radar system further comprises an artificial neural network configured to output the waveform modulation vector based on the code vector.

In some embodiments, the radar system further comprises an arbitrary waveform generator configured to synthetize the radar signal based on the waveform modulation vector.

In some embodiments, the input interface comprises a mapping means configured to encode the signal characteristics, the mapping means configured to use a predetermined mapping function or a mapping model.

In some embodiments, the artificial neural network comprises a decoder of a variational autoencoder.

According to yet a further aspect, the embodiments relate to a sonar system for determining a waveform modulation vector indicative of a sonar signal with signal characteristics. The sonar system comprises an input interface configured to provide a code vector representing real values encoding the signal characteristics of the waveform modulation vector, wherein the code vector has a dimension smaller than a dimension of the waveform modulation vector. The sonar system further comprises an artificial neural network configured to output the waveform modulation vector based on the code vector.

**Brief description of the Figures**

Some examples of apparatuses and/or methods will be described in the following by way of example only, and with reference to the accompanying figures, in which

Fig. 1a    illustrates a first phase modulation diagram for a first example of a waveform modulation vector;

Fig. 1b    illustrates a spectral representation for the first example of the waveform modulation vector;

Fig. 2a    illustrates a second phase modulation diagram for a second example of the waveform modulation vector;

Fig. 2b    illustrates a frequency modulation diagram for the second example of the waveform modulation vector;

Fig. 3a    illustrates an ambiguity function for the first example of the waveform modulation vector;

Fig. 3b    illustrates a zero Doppler cut of the ambiguity function;

Fig. 4    illustrates an apparatus for determining a waveform modulation vector in accordance with an embodiment of the present disclosure;

Fig. 5    illustrates an apparatus for determining a waveform modulation vector in accordance with a further embodiment of the present disclosure;

Fig. 6a  illustrates a variational autoencoder comprising a trainable encoder and a trainable decoder;

Fig. 6b  illustrates an alternative variational autoencoder;

Fig. 6c  illustrates a fixed autoencoder comprising a fixed encoder and a trainable decoder;

Fig. 7  illustrates an example of a code vector space;

Fig. 8a  illustrates a first training dataset;

Fig. 8b  illustrates a second training dataset;

Fig. 9  illustrates a generative adversarial network;

**Detailed Description**

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

An objective of the present disclosure may be dynamically determining a waveform modulation vector used for modulating a radar signal, wherein the waveform modulation vector approximately, if not exactly, matches signal characteristics. The signal characteristics may be previously known and will be explained later. The skilled person will appreciate that embodiments of the present disclosure can also be suitable for a sonar system or another field using a waveform modulation.

Generally, the waveform modulation vector can be considered a vector of complex numbers giving a complete or partial description of a complex envelope of a modulated carrier signal at discrete points in time. Such a vector x can have a following form:

$x = [x_1, x_2, ..., x_N]$, where N can refer to an amount of samples in one signal pulse and
where an index 1 to N can refer to a certain sample in a time domain.

If the description is complete, x can comprise samples of in-phase and quadrature components or phase and amplitude components. If the description is partial, x can comprise phase, frequency and/or amplitude samples. x can comprise a stacked vector to allow for combinations of phase, amplitude and frequency samples.

The waveform modulation vector can represent a conventional waveform modulation, such as a linear and nonlinear frequency modulation, Costas frequency codes, Barker codes, Golomb codes, or Frank codes, for example. Furthermore, the waveform modulation vector can describe any and all possible waveforms that can be given to an arbitrary waveform generator to generate a modulated carrier signal, wherein the modulated carrier signal ideally has the signal characteristics. An arbitrary waveform generator (AWG) is a piece of electronic equipment used to generate electrical waveforms. These waveforms can be either repetitive or single-shot (once only) in which case some kind of triggering source is required (internal or external). Unlike function generators, AWGs can generate any arbitrarily defined waveshape as their output. The waveform is usually defined as a series of "waypoints" (e.g., specific voltage targets occurring at specific times along the waveform) and the AWG can either jump to those levels or use any of several methods to interpolate between those levels. The waveform modulation vector may be understood as those "waypoints".

The signal characteristics of the RF- or radar signal can comprise any requirement to match a specific task, an environment, a target scene, and/or target signatures. The signal characteristics can be considered parameters being optimized dynamically and that are desired to influence the waveform modulation vector. The signal characteristics can comprise environmental features, ambiguity function features, or spectral features of the waveform modulation vector.

Possible examples for the signal characteristics comprise and are not limited to:

- ambiguity function features, such as measurement requirements and desired waveform characteristics, peak sidelobe levels or ratio, integrated sidelobe levels, delay and Doppler resolution, measurement accuracy in delay or Doppler, delay or Doppler correlation, Doppler tolerance, a set of evaluations of the ambiguity function for delay and Doppler values;
- spectral features, such as signal bandwidth, set of values of a frequency domain representation, or a width, location, extent, depth, number of spectral notches.

Environmental features which can be mapped to the signal characteristics can comprise and are not limited to:

- parameters of a target and a current environment, such as target locations, target radar signatures, extent of clutter in delay or Doppler, clutter areas and types, occupied frequency bands, range and radial velocity of targets, position and velocity of targets, type and cross section of targets, or amplitude of clutter or center frequency and bandwidth of other spectrum users;
- parameters describing an uncertain perception of targets and an environment: if target and environmental parameters may not be exactly known, probability density function parameters can be used, for example, probabilistic information on target parameters or probabilistic information on the occupied frequency bands.

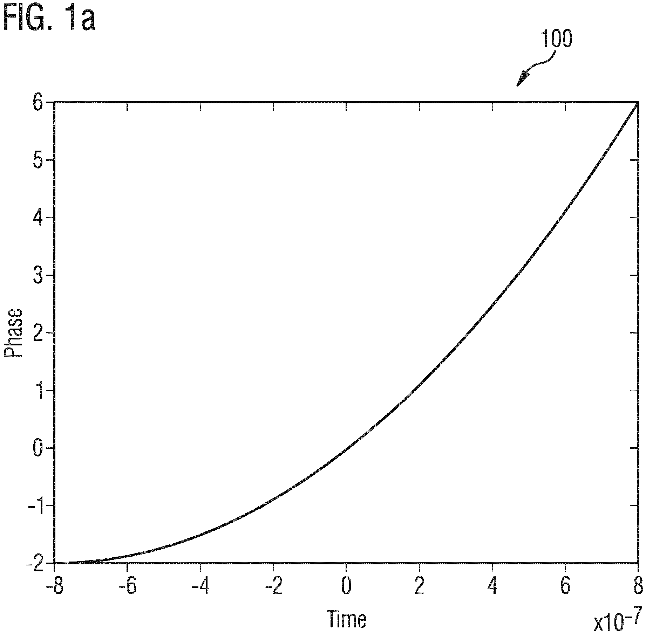

**Fig. 1a** illustrates a first phase modulation diagram 100 for a first example of the waveform modulation vector. The first phase modulation diagram 100 shows a phase of the waveform modulation vector over time. The first example of the waveform modulation vector can be considered a linear frequency modulation, otherwise known as a chirp. As a frequency equals a change rate of the phase, the first example of the waveform modulation vector can result in a linearly increasing frequency of a modulated carrier signal.

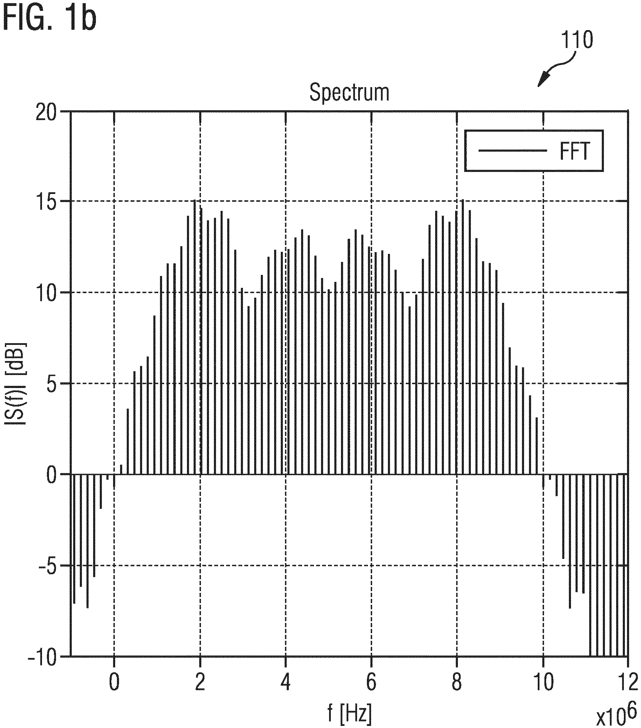

**Fig. 1b** illustrates a spectral representation 110 for the first example of the waveform modulation vector. The spectral representation 110 is a result of a Fourier transform. The spectral representation is a signal characteristic that shows a distribution of energy for the waveform modulation vector. In this case, the energy is relatively evenly distributed in a bandwidth of 0 to 10 MHz.

The distribution of energy can be characterized by spectral features, such as different bandwidth measures (e.g. 6dB, 10dB, 20dB) or spectral notches.

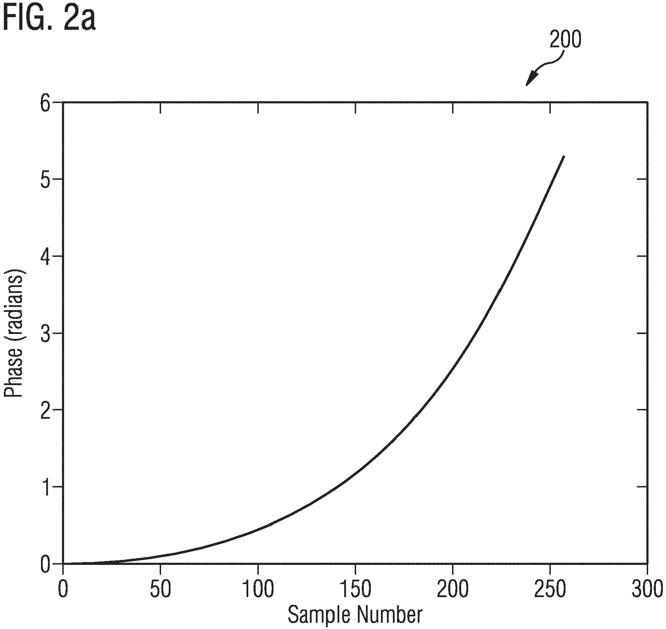

**Fig. 2a** illustrates a second phase modulation diagram 200 for a second example of the waveform modulation vector. The second phase modulation diagram 200 shows a continuously increasing phase between adjacent samples of the waveform modulation vector on a vertical axis over a number of samples. In this case, the number of samples is 256 and the signal pulse has a constant amplitude. Therefore, the second example of the waveform modulation vector comprises 256 real values representing the phase of a baseband signal.

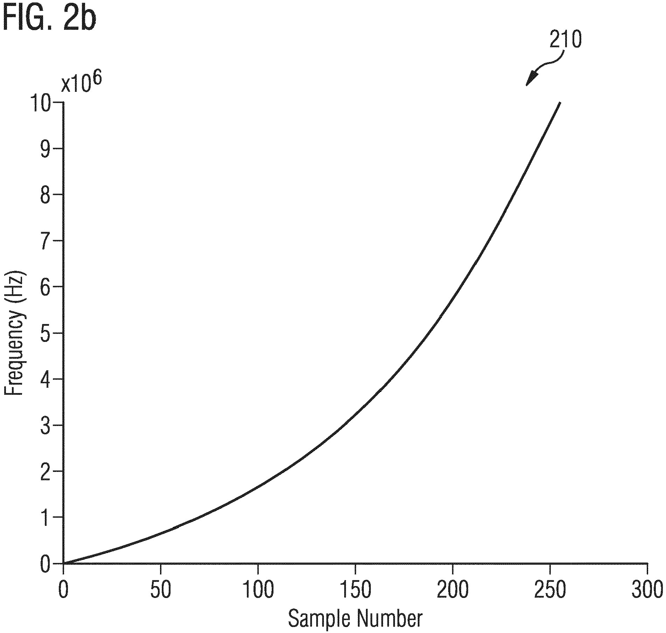

**Fig. 2b** illustrates a frequency modulation diagram 210 according to a third example of the waveform modulation vector. The frequency modulation diagram 210 shows a continuously increasing frequency between adjacent samples of the waveform modulation vector on a vertical axis over a number of samples. In the illustrated example, the number of samples is 256 and the signal pulse has a constant amplitude. Therefore, the third example of the waveform modulation vector comprises 256 real values representing the frequency of a baseband signal.

An example of the signal characteristics may comprise ambiguity function features, such as a desired measurement resolution for a specific velocity of a radar target. In this case, an ambiguity function of the waveform modulation vector shall ideally show the desired ambiguity function features.

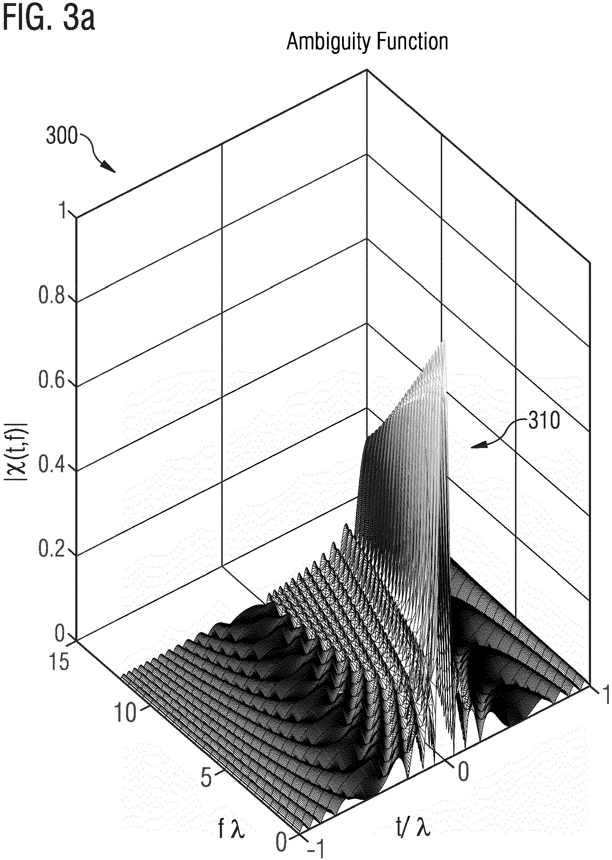

**Fig. 3a** illustrates an ambiguity function 300 for the first example of the waveform modulation vector. The ambiguity function 300 is shown as a 3D-diagram with ambiguity function values on a vertical axis over a frequency and time. These ambiguity function values can be ambiguity features and hence signal characteristics. The ambiguity function values stay mainly flat and show a main peak 310. Smaller peaks occupy areas next to the main peak 310.

The ambiguity function 300 can be considered a function of a time delay and a Doppler shift of the modulated carrier signal. The time delay can be retrieved from a time course of the ambiguity function 300, the Doppler shift can be retrieved from a frequency course of the ambiguity function 300. In pulsed radar and sonar signal processing, an ambiguity function is a two-dimensional function of propagation delay and Doppler frequency.

The ambiguity function 300 can represent a response of a filter matched to a specific signal, when a returned pulse encounters the time delay and the Doppler shift. The time delay can indicate a distance of a target. The Doppler shift can indicate a velocity of the target. The ambiguity function 300 is defined by the pulse and filter.

A common definition of the ambiguity function 300 can be:

$$|\chi(\tau, \upsilon)| = \left| \int_{-\infty}^{\infty} u_x(t) u_x^*(t + \tau) \exp(j2\pi \upsilon t)\, dt \right|,$$

where $\tau$ can be the time delay, $v$ can be the Doppler shift, * can denote a complex conjugate, j can be an imaginary unit and $u_x(t)$ can be a complex envelope of a modulated carrier signal, the complex envelope corresponding to the waveform modulation vector x.

The ambiguity function 300 can be characterized by ambiguity function features which can be part of the signal characteristics. The ambiguity function features can indicate a measurement accuracy of the time delay and Doppler shift of the modulated carrier signal. The ambiguity function features can further comprise a resolution or a sidelobe level, as defined in the following:

- Resolution: A width of a main lobe/peak can determine the measurement resolution. For example, the thinner and spikier the main lobe/peak is in a certain dimension the more accurate the measurement can be in the dimension. For example, if a zero Doppler cut has a very thin main peak then a delay resolution can be high. The same can apply in a Doppler dimension.
- Sidelobe level: Additional peaks to a left and a right of the main lobe/peak can be called sidelobes. An important ambiguity function feature can be a peak-sidelobe level, that is how far the highest sidelobe is below the main lobe. Ideally the sidelobes are as low as possible.

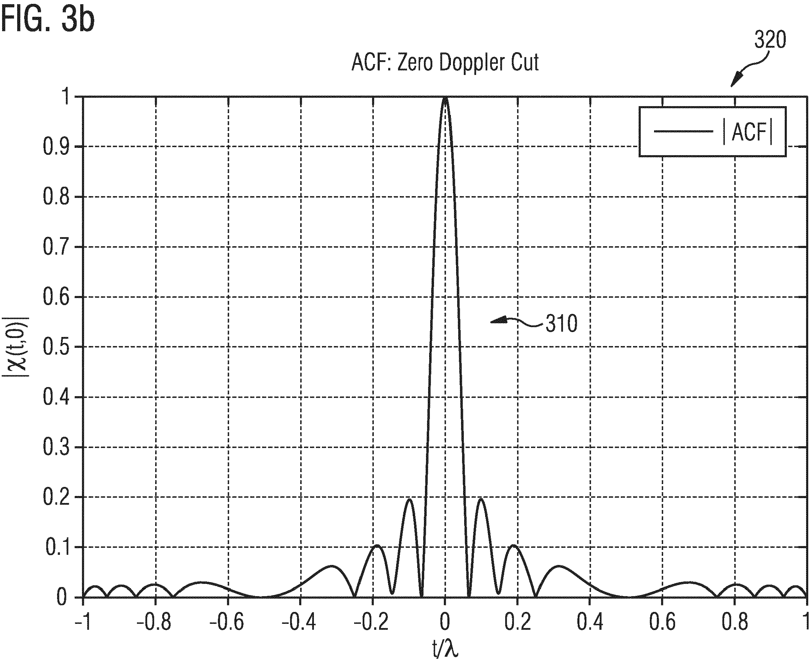

**Fig. 3b** illustrates a zero Doppler cut 320 of the ambiguity function 300. The zero Doppler cut 320 can be considered a 1D cut of the ambiguity function 300 for which a Doppler frequency is zero. The main peak 310 is a thin and high peak, surrounded by smaller peaks.

The aforementioned ambiguity function features can be calculated by hand and are interpretable by a human. However, an artificial neural network can learn ambiguity function features that may not be interpretable by a human. According to embodiments of the present disclosure, such an artificial neural network can constitute part of a radar system for determining a waveform modulation vector.

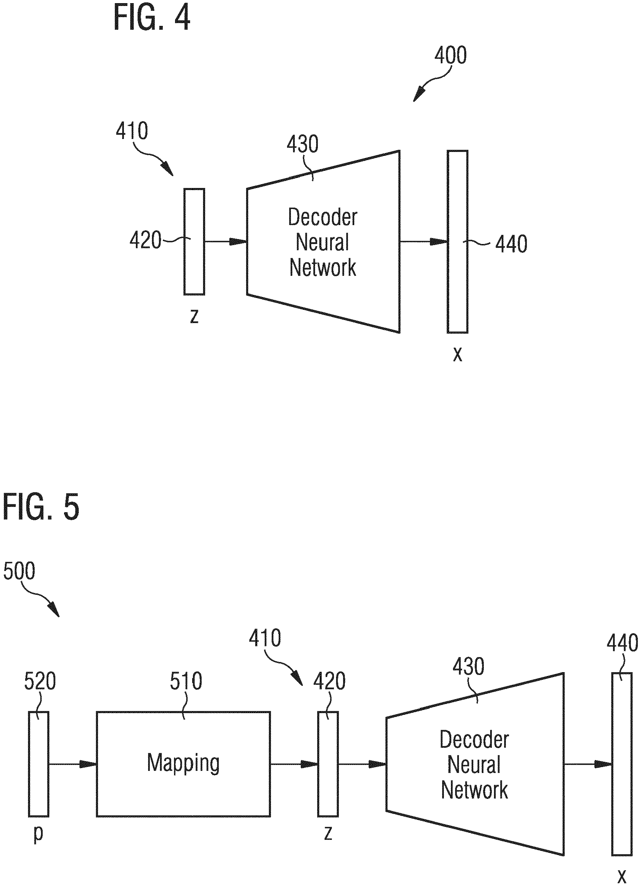

**Fig. 4** shows a block diagram of an apparatus 400 for determining a waveform modulation vector indicative of a modulated carrier signal with signal characteristics. The modulated carrier signal may be a radar or sonar signal, for example. Signal characteristics may be ambiguity function features and/or spectral features, for example.

Apparatus 400 comprise an input interface 410 configured to provide a code vector 420 representing real values encoding the signal characteristics. Apparatus 400 further comprises an artificial neural network 430 configured to output an estimate of the waveform modulation vector 440 based on the code vector 420. The code vector may have a dimension smaller than a dimension of the estimate 440 of the waveform modulation vector and/or the signal characteristics.

The artificial neural network 430 may implement a so-called deep generative model (DGM) or at least a part thereof. Examples of DGMs include Variational Autoencoders (VAEs), Generative Adversarial Networks (GANs), and auto-regressive models. The artificial neural network 430 translates the code vector 420 to a corresponding waveform modulation vector 440. The code vector 420 may encode signal characteristics of the modulated carrier signal, such as ambiguity function features and/or spectral features.

The (deep) generative model implemented by artificial neural network 430 can describe a functional relationship between the code vector 420 and the waveform modulation vector 440, for example in a following form:

$$x = f(z; \theta),$$

where x can represent the waveform modulation vector 440, z can represent the code vector 420 and $\theta$ can represent computational weights of the artificial neural network 430. f can represent a functional relationship between x and z. As part of the apparatus 400, the artificial neural network 430 can accommodate complex non-linear modelling. The artificial neural network 430 can apply the functional relationship $f(.)$ to the code vector 420. This can be considered as a decompression or decoding of the lower-dimensional code vector 420, resulting in the higher-dimensional waveform modulation vector 440.

The code vector 420 can be comparable to an embedding. An embedding is a relatively low-dimensional space into which higher-dimensional vectors can be translated. The code vector 420 according to embodiments of the present disclosure can be structured by the signal characteristics. In other words, the code vector 420 can encode or embed the signal characteristics of a modulated carrier signal, such as ambiguity function features and/or spectral features. The code vector 420 can therefore be thought of as a lower dimensional representation of the signal characteristics.

As specific signal characteristics are desired in specific environmental conditions, a code vector 420 encoding the signal characteristics may make it easier to determine the waveform modulation vector 440 which approximately matches the signal characteristics.

The code vector 420 can represent a vector of real values with a specified dimension, wherein the specified dimension is usually smaller than a dimension of the desired waveform modulation vector. The code vector 420 can be predefined. Alternatively, the code vector 420 can be generated during a training of the artificial neural network 430, e.g. as part of a VAE, as explained below.

Usually, the code vector 420 has a different structure than the signal characteristics, such as ambiguity function features and/or spectral features. Therefore, a mapping means may be needed. The mapping means can be utilized for mapping signal characteristics on the code vector 420.

According to some embodiments of the present disclosure, a radar system for determining the waveform modulation vector 440 can comprise an altered generative model. A corresponding apparatus 500 is depicted in **Fig. 5**. Apparatus 500 comprises apparatus 400 described above extended by a mapping block 510 upstream to the code vector 420. The skilled person having benefit from the present disclosure will appreciate that mapping block 510 may be implemented by software and/or dedicated mapping circuitry.

On the basis of signal characteristics 520 of a modulated carrier signal, the mapping block 510 can return the corresponding code vector 420 or a probability density function defined on the code vector 420. It may be necessary to set parameters of the mapping block 510 because the code vector 420 can vary structurally for different instantiations.

That is to say, the signal characteristics 520, such as ambiguity function features and/or spectral features, may be mapped (encoded) to code vector 420. Code vector 420 may be mapped (decoded) to waveform modulation vector 440 approximately having the signal characteristics 520.

Alternatively or additionally, the mapping block 510 may map environmental features, such as velocity, position, type, cross section of objects in an environment of the modulated carrier signal, to signal characteristics 520, such as ambiguity function features and/or spectral features, which are then mapped (encoded) to code vector 420. This may simplify an encoding of code vector 420.

The mapping block 510 can implement a predetermined mapping function, an adjustable mapping model, or an optimizer.

The predetermined mapping function can be any fixed, predetermined function suitable for mapping the signal characteristics 520 on the code vector 420 and vice versa. For example, the signal characteristics 520 associated with specific values of the code vector 420 can be found, allowing the code vector 420 for other signal characteristics 520 to be calculated through interpolation.

Alternatively, a difference in the code vector 420 associated with the signal characteristics 520 can be found. For example, specific values of the code vector 420 associated with a spectral notch can be found and added to the code vector 420 for other spectral notches.

The mapping function can be implemented as a mapping model, such as an artificial neural network. As a relationship between the signal characteristics 520 and the code vector 420 can be functional, the mapping model can be trained using a supervised learning method. This may be advantageous because the mapping model can learn a complex optimization process, such as a stochastic optimization process that selects the waveform modulation vector 440 based on the signal characteristics 520. The mapping model can replace a numerical optimization process, thus allowing a stochastic optimization process to be implemented in a much faster form.

Alternatively, the mapping block 510 can be implemented as a numerical optimizer for finding the code vector 420 that best matches the signal characteristics 520.

Before combining the mapping block 510 with the artificial neural network 430, the artificial neural network 430 can be trained to adjust computational weights (neurons or perceptrons) of one or more layers of the artificial neural network 430.

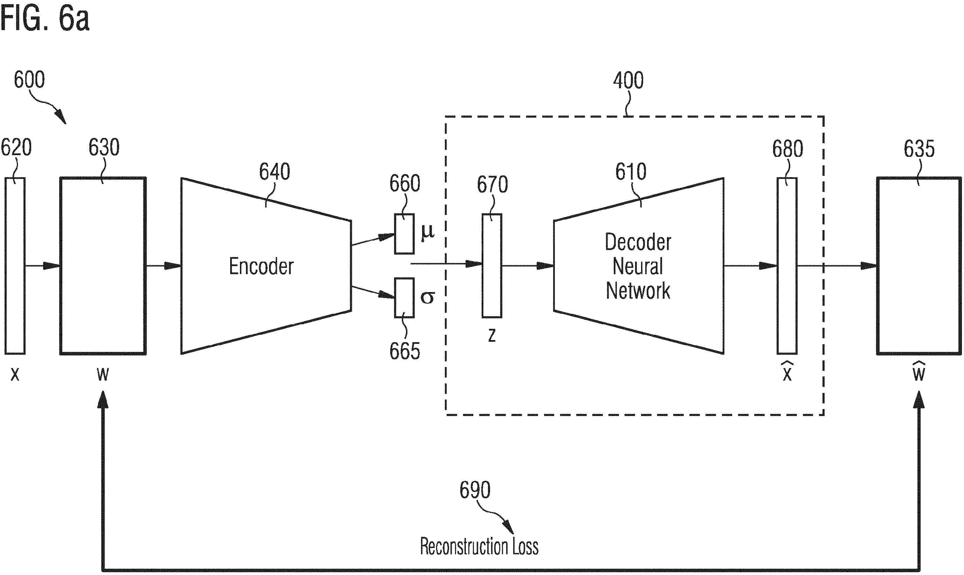

**Fig. 6a** illustrates a variational autoencoder 600 implementing a DGM according to an embodiment of the present disclosure. The variational autoencoder 600 can be used for a training of the artificial neural network 430. In the illustrated example, the artificial neural network 430 is implemented as a decoder portion 610 of the variational autoencoder 600, while the mapping block 510 is implemented as an encoder portion 640 of the variational autoencoder 600. The apparatus 400 implementing the (deep) generative model is shown inside the dotted rectangle.

The (variational) autoencoder 600 is a type of artificial neural network used to learn efficient data codings (code vectors) in an unsupervised manner. The aim of the autoencoder 600 is to learn a representation (code vector) for a set of data, typically for dimensionality reduction, by training the network to ignore signal "noise". In embodiments of the present disclosure, the set of data for which code vectors 670 are learned may be signal characteristics 630 of modulated carrier signals, such as ambiguity function features and/or spectral features. Along with a reduction side (encoder 640), a reconstructing side (decoder 610) is learned, where the autoencoder 600 tries to generate from the reduced encoding (code vector 670) a representation 680 as close as possible to its original input 620.

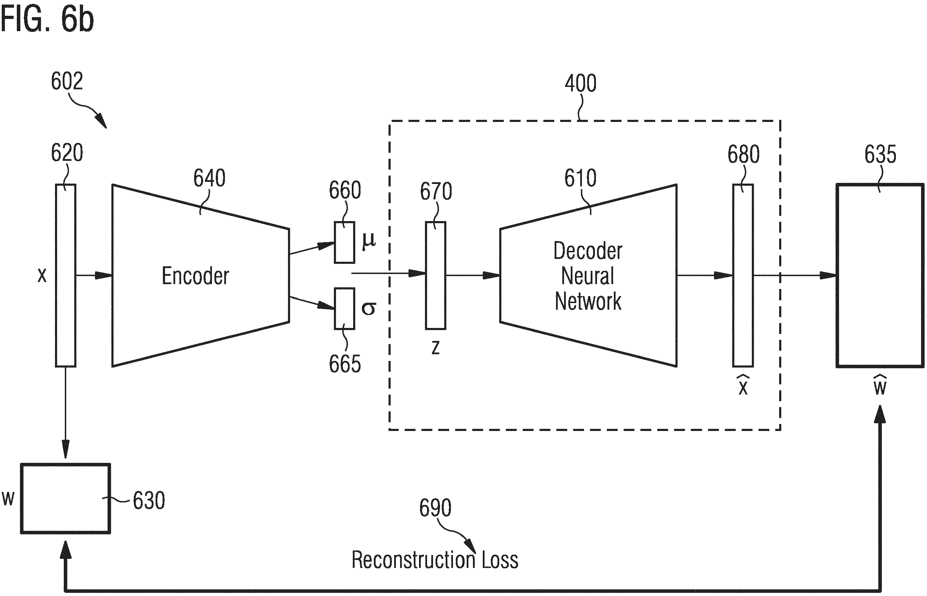

A dataset of at least one training waveform modulation vector is provided, designated as input waveform modulation vector 620. Signal characteristics 630, such as ambiguity function features and/or spectral features, are determined from the input waveform modulation vector 620 and are provided as an input to the encoder 640. Alternatively, the input waveform modulation vector 620 may be directly provided as input to the encoder 640, as it is shown in the alternative variational autoencoder 602 of **Fig 6b.** The encoder network 640 produces parameters of the aforementioned probability density function described by a mean vector $\mu$ 660 and a standard deviation vector $\sigma$ 665. A code vector 670 is randomly generated based on the mean vector 660 and the standard deviation vector 665. The decoder 610 outputs an estimated output waveform modulation vector 680 based on the code vector 670. Signal characteristics 635, such as ambiguity function features and/or spectral features, are retrieved from the estimated output waveform modulation vector 680.

The variational autoencoder 600 uses a loss function based on an evidence lower bound, which contains a reconstruction loss 690. To ensure that the code vector 670 is structured by signal characteristics, embodiments of the present disclosure comprise a reconstruction loss 690 that is taken as a difference between known signal characteristics 630 of the input waveform modulation vector 620 and signal characteristics 635 of the estimated output waveform modulation vector 680. Computational weights of the decoder 610 (and the encoder 640) are adjusted to minimize the reconstruction loss 690.

Once the decoder 610 has been trained, it can be used as artificial neural network 430 in the architecture shown in **Fig. 4.** For a training of the artificial neural network 430, the variational autoencoders 600, 602 can be well-suited because they create a continuous, hence interpolatable code vector space. Nevertheless, the training could be realized by autoencoders other than the variational autoencoders 600, 602. In this case, the encoder 640 may directly output code vectors instead of probability density functions, thus a sampling process may be removed. The sampling process generates a random sample according to the mean vector and standard deviation. A loss function can be used without the evidence lower bound but including a reconstruction loss.

According to some embodiments of the present disclosure, the encoder 640 may comprise a long short-term memory (LSTM). Long short-term memory (LSTM) is an artificial recurrent neural network (RNN) architecture. Unlike standard feedforward neural networks, LSTM has feedback connections. It can not only process single data points, but also entire sequences of data. A common LSTM unit is composed of a cell, an input gate, an output gate and a forget gate. The cell remembers values over arbitrary time intervals and the three gates regulate the flow of information into and out of the cell. LSTM networks are well-suited to classifying, processing and making predictions based on time series data, since there can be lags of unknown duration between important events in a time series. For example, the LSTM can have 20 layers and can be followed by a dense fully connected layer. The dense fully connected layer can output the mean 660 and the standard deviation 665 on a code vector space, wherein the code vector space is explained below. After a training the variational autoencoder 600, the encoder 640 can have a following Keras description (Keras is a deep learning API written in Python, running on top of the machine learning platform TensorFlow):

Model: "encoder_1stm"

| Layer (type) | Output Shape | Param # | Connected to |
|---|---|---|---|
| input 3 (InputLayer) | [(None, 256)] | 0 | |
| reshape_2 (Reshape) | (None, 256, 1) | 0 | input 3[0][0] |
| lstm (LSTM) | (None, 20) | 1760 | reshape _ 2[0][0] |
| z_mean (Dense) | (None, 2) | 42 | lstm[0][0] |
| z_log var (Dense) | (None, 2) | 42 | lstm[0][0] |
| sampling 1 (Sampling) | (None, 2) | 0 | z_mean[0][0] z_log_var[0][0] |

Total params: 1,844
Trainable params: 1,844
Non-trainable params: 0

Alternatively, the encoder 640 can be a dense and convolutional network.

According to some embodiments of the present disclosure, the decoder 610 may be a LSTM with a variable number of layers followed by a time distributed dense layer. The dense layer can produce an output waveform modulation vector 680 comprising for example 256 samples of phase values of a radar signal pulse. After a training in the variational autoencoder 600, an embodiment of the decoder 610 can have a following Keras description:

Model: "decoder_1stm"

| Layer (type) | Output Shape | Param # |
|---|---|---|
| input_ 4 (InputLayer) | [(None, 2)] | 0 |
| repeat_vector (RepeatVector) | (None, 256, 2) | 0 |
| 1stm_1 (LSTM) | (None, 256, 20) | 1840 |
| time_distributed (TimeDistri | (None, 256, 1) | 21 |
| flatten_2 (Flatten) | (None, 256) | 0 |

Total params: 1,861
Trainable params: 1,861
Non-trainable params: 0

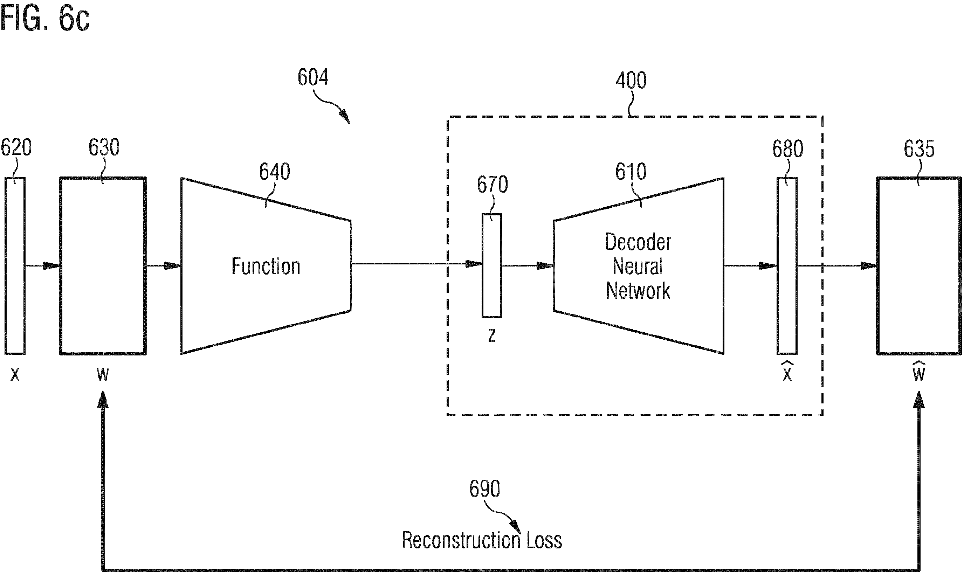

If the autoencoder is a known fixed autoencoder 604, see **Fig. 6c,** the encoder 640 may not require training with the decoder 610. Here, the encoder 640 implements a fixed, predetermined mapping function.

According to the autoencoder embodiments illustrated in Figs. 6a-c, the training of the decoder 610 includes providing training data of at least one input waveform modulation vector 620 and corresponding signal characteristics 630. The training data 630 is mapped on a corresponding code vector 670. An output waveform modulation vector 680 is generated based on the corresponding code vector 670 by using the decoder 610. The output waveform modulation vector 680 translates to output signal characteristics 635. Computational weights of the decoder 610 are adjusted to reduce a difference between the training signal characteristics 630 and the output signal characteristics 635.

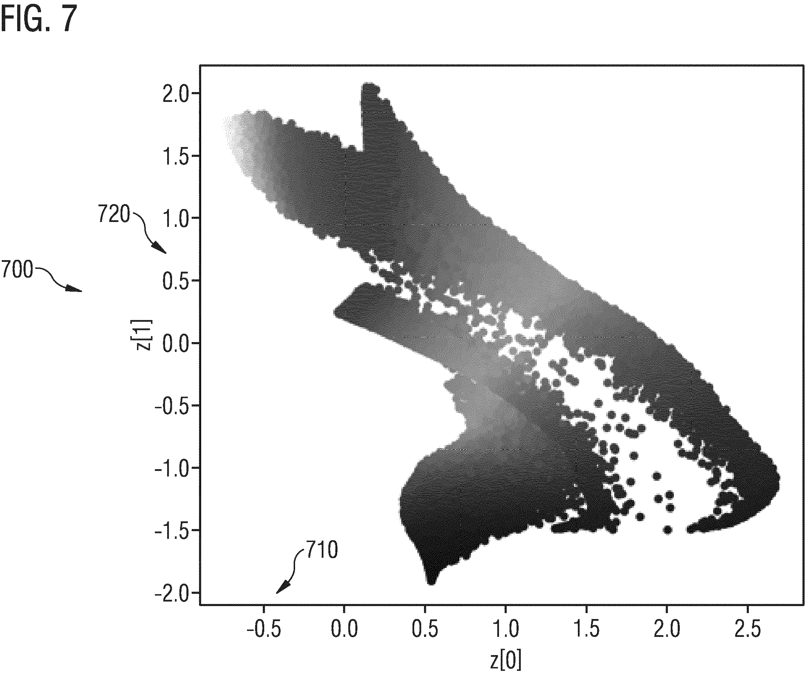

**Fig. 7** illustrates an example of a code vector space 700, as a result of a training of the variational autoencoder 600. The code vector space 700 is shown in a 2D-plot. The code vector space 700 may contain all possible code vectors. In the illustrated example, the code vector space has merely two dimensions, which means a code vector z with two vector elements $z(0)$ and $z(1)$. The vector elements $z(0)$ and $z(1)$ are shown on an axis 710 and 720 in the 2D-plot. The skilled person having benefit from the present disclosure will appreciate that a code vector dimension of two is merely for illustrative purposes and that higher dimensions may be advantageous to improve an accuracy of the artificial neural network 430.

The code vector space 700 is structured by the signal characteristics 630 of a training dataset comprising one or more input waveform modulation vectors 620. Each point in the 2D-plot of Fig. 7 may be a mean value $\mu$ of an output of the variational autoencoder 600, the mean value $\mu$ corresponding to one of the input waveform modulation vector 620. The 2D-plot can be thought of as showing how the training dataset is encoded into corresponding code vectors 420. Input waveform modulation vectors 620 that have similar ambiguity function and spectral characteristics occupy similar regions in the code vector space 700. A continuous structure of the code vector space 700 can be exploited for finding new code vectors. For example, the new code vectors can be found by interpolation.

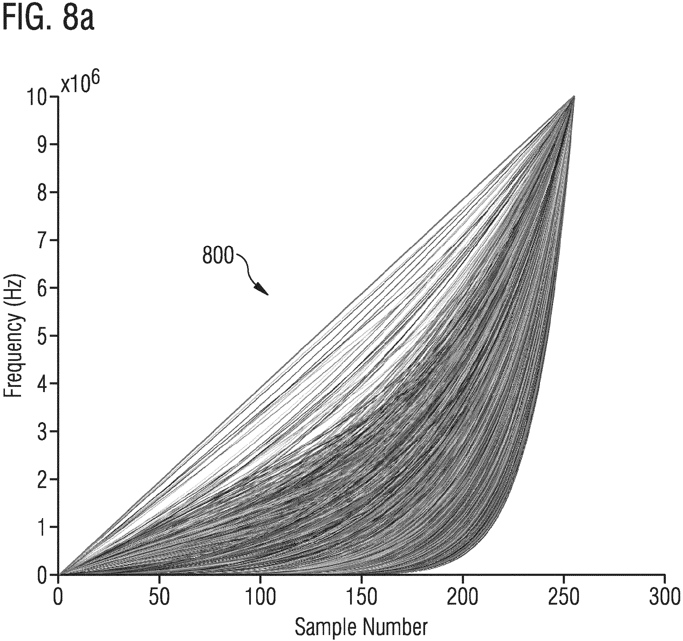

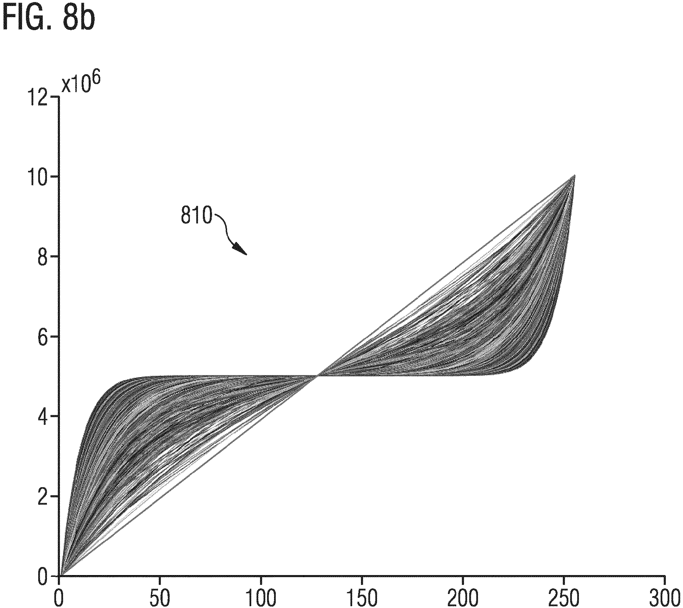

**Fig. 8a** and **Fig. 8b** illustrate a first 800 and a second training dataset 810 of input waveform modulation vectors 620. The first training dataset 800 and the second training dataset 810 are shown in frequency modulation diagrams. In total, the first training dataset 800 and second training dataset 810 comprise 40.000 input waveform modulation vectors 620, each with 256 samples.

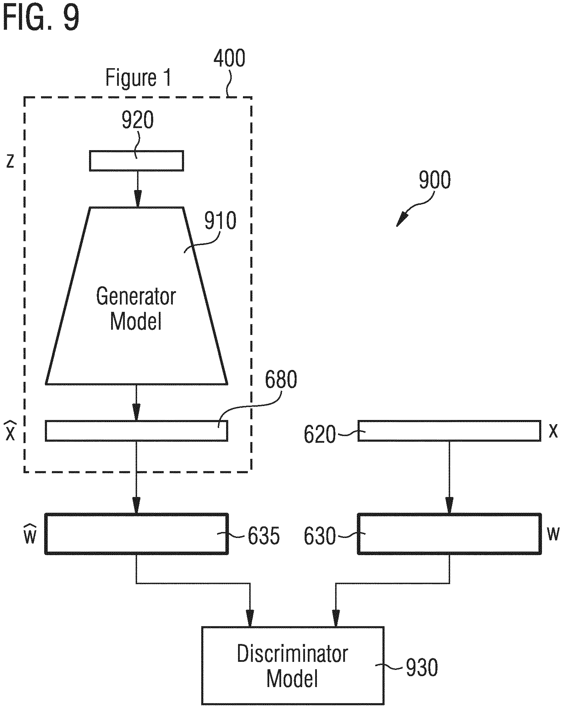

As an alternative to a variational autoencoder 600, the artificial neural network 430 can be trained as part of a generative adversarial network (GAN) 900, see **Fig. 9.** GAN 900 comprises a generator 910 for generating waveform modulation vector estimates of and a discriminator 930 for comparing signal characteristics 635 of the output waveform modulation vector estimates 680 against signal characteristics 630 of input waveform modulation vectors 620. The core idea of GAN 900 is based on the "indirect" training through the discriminator 930, which itself is also being updated dynamically. This basically means that the generator 910 is not trained to minimize the distance to a specific training waveform modulation vectors, but rather to fool the discriminator 930. Here, the artificial neural network 430 of Fig. 4 implements the generator 910 of GAN 900.

Initially, a random code vector 920 is provided as input to the generator 910. The generator model 910 generates an output waveform modulation vector estimate 680 based on the random code vector 920. Signal characteristics 635, such as ambiguity function features and/or spectral features, are retrieved from the output waveform modulation vector estimate 680. The discriminator 930 compares the signal characteristics 635 retrieved from the output waveform modulation vector estimate 680 with signal characteristics 630 retrieved from a input waveform modulation vector 620. In this manner, the discriminator 930 can evaluate an accuracy of the generator 910 (or the artificial neural network 430). Computational weights of the generator 910 implementing artificial neural network 430 are adjusted according to the accuracy.

According to the embodiment illustrated in Figs. 9, the training of the generator 910 includes providing training data of at least one input waveform modulation vector 620 and corresponding training signal characteristics 635. A training code vector 920 is provided by using randomized real values sampled from a predetermined code vector space. An output waveform modulation vector 680 is generated based on the training code vector 920 by using the generator network 910. The output waveform modulation vector 680 translates to output signal characteristics 635. An accuracy of the generator network 910 is evaluated by comparing the training signal characteristics 630 and the output signal characteristics 635. Computational weights of the generator network 910 are adjusted based on the accuracy of the generator network 910. The accuracy is determined via discriminator 930.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

|     |                              |
|-----|------------------------------|
| 100 | first phase modulation diagram; |
| 110 | spectral representation;     |
| 200 | second phase modulation diagram; |
| 210 | frequency modulation diagram; |
| 300 | ambiguity function;          |
| 310 | main peak;                   |
| 320 | zero Doppler cut;            |
| 400 | apparatus;                   |
| 410 | input interface;             |
| 420 | code vector;                 |
| 430 | artificial neural network;   |
| 440 | waveform modulation vector;  |
| 500 | apparatus;                   |
| 510 | mapping block;               |
| 520 | signal characteristics;      |
| 600 | variational autoencoder;     |

602     alternative variational autoencoder;
604     fixed autoencoder;
610     decoder;
620     input waveform modulation vector;
630     input signal characteristics;
635     output signal characteristics;
640     encoder;
660     mean vector;
665     standard deviation;
670     sampled code vector;
680     output waveform modulation vector;
690     reconstruction loss;
700     code vector space;
710     axis z(0);
720     axis z(1);
800     first training data set;
810     second training data set;
900     generative adversarial network;
910     generator network;
920     random code vector;
930     discriminator model;

**Claims**

1.  A method for determining a waveform modulation vector (440) indicative of a modulated carrier signal with signal characteristics, the method comprising:

    providing a code vector (420) representing real values encoding the signal characteristics (520) of the waveform modulation vector (440), wherein the code vector (420) has a dimension smaller than a dimension of the waveform modulation vector (440);
    feeding the code vector (420) to an artificial neural network (430) to output the waveform modulation vector (440).

2.  The method according to claim 1, wherein providing the code vector (420) comprises encoding the signal characteristics (520) by using a predetermined mapping function or a mapping model.

3.  The method according to one of the previous claims, wherein the signal characteristics (520) comprise at least one of ambiguity function features, spectral features of the waveform modulation vector (440).

4.  The method according to claim 3, wherein the ambiguity function features comprise at least one of Doppler tolerance, desired measurement accuracy, peak sidelobe level, resolution, a set of evaluations of the ambiguity function for delay and Doppler values, correlation of a delay and a Doppler component of the modulated carrier signal, the delay component indicating a distance of a target, the Doppler component indicating a velocity of the target.

5.  The method according to claim 3 or 4, wherein the spectral features comprise at least one of a signal bandwidth, a set of values of a frequency domain representation, locations, extents and depths of spectral notches of the modulated carrier signal.

6.  The method according to one of previous claims, further comprising mapping environmental features to the signal characteristics and encoding signal characteristics into the code vector.

7.  The method according to claim 6, wherein the environmental features comprise at least one of range, velocity, position, type, cross section of objects, location, extent, amplitude of clutter, center frequency, bandwidth of other spectrum users.

8.  The method according to one of the previous claims, wherein the waveform modulation vector (440) comprises complex numbers describing an envelope of the modulated carrier signal at discrete points in time.

9. The method according to one of the previous claims, wherein the waveform modulation vector (440) comprises at least one of in-phase components, quadrature components, phase components, amplitude components, frequency components of the modulated carrier signal.

10. The method according to one of the previous claims, wherein the artificial neural network (430) comprises a decoder (610) of a variational autoencoder (600).

11. The method according to one of the claims 1 to 9, wherein the artificial neural network (430) comprises a generator (910) of a generative adversarial network (900).

12. The method according to one of the previous claims, the method further comprising a training of the artificial neural network (430), the training comprising:

providing training data (800, 810) of at least one input waveform modulation vector (620) and corresponding signal characteristics (630);
mapping the training data (800, 810) on a corresponding code vector (670);
generating an output waveform modulation vector (680) based on the corresponding code vector (670) by using the artificial neural network (430), the output waveform modulation vector (680) translating to output signal characteristics (635);
adjusting computational weights of the artificial neural network (430) to reduce a difference between the input and the output signal characteristics (630, 635).

13. The method according to claim 12, wherein mapping the training data (800, 810) is performed by using an encoder (640) of a variational autoencoder (600, 602) for setting up a probability density function of the corresponding code vector (670).

14. The method according to claim 13, wherein the encoder (640) comprises a long short-term memory.

15. The method according to one of the claims 1 to 11, the method further comprising a training of the artificial neural network (430), the training comprising:

providing training data (800, 810) of at least one input waveform modulation vector (620) and corresponding input signal characteristics (630);
providing a training code vector (920) by using randomized real values sampled from a predetermined code vector space;
generating an output waveform modulation vector (680) based on the training code vector (920) by using the artificial neural network (430), the output waveform modulation vector (680) translating to output signal characteristics (635);
evaluating an accuracy of the artificial neural network (430) by comparing the input and the output signal characteristics (630, 635);
adjusting computational weights of the artificial neural network (430) based on the accuracy of the artificial neural network (430).

FIG. 1a

# FIG. 1b

Spectrum — 110

Plot showing |S(f)| [dB] on the vertical axis versus f [Hz] on the horizontal axis (×10⁶), with a legend labeled "FFT".

## FIG. 2a

FIG. 2b

# FIG. 3a

Ambiguity Function

FIG. 3b

ACF: Zero Doppler Cut

320

310

|ACF|

$|\chi(t,0)|$

t/λ

EP 4 060 367 A1

FIG. 4

FIG. 5

FIG. 6a

EP 4 060 367 A1

FIG. 6b

EP 4 060 367 A1

# FIG. 6c

EP 4 060 367 A1

FIG. 7

FIG. 8a

FIG. 8b

FIG. 9

Figure 1                    400

920

Z

910

Generator
Model

680

$\widehat{X}$

620                    X

$\widehat{W}$              635        630                    W

Discriminator
Model                    930

900

Europäisches
Patentamt

European
Patent Office

Office européen
des brevets

# EUROPEAN SEARCH REPORT

**Application Number**

EP 21 16 2629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/044899 A1 (CHEN FANGJIONG [CN] ET AL) 6 February 2020 (2020-02-06) * paragraphs [0035] - [0056]; figures 1-4 * ----- | 1-15 | INV. G01S7/02 G01S7/41 G06N3/02 G06K9/62 G06N20/00 |
| A | US 10 003 483 B1 (MIGLIORI BENJAMIN J [US] ET AL) 19 June 2018 (2018-06-19) * column 3, line 32 - column 10, line 45 * * column 15, line 3 - column 16, line 34 * * figures 2A-3C, 7, 8 * ----- | 1-15 | |
| A | PING LANG ET AL: "A Comprehensive Survey of Machine Learning Applied to Radar Signal Processing", ARXIV.ORG, CORNELL UNIVERSITY LIBRARY, 201 OLIN LIBRARY CORNELL UNIVERSITY ITHACA, NY 14853, 29 September 2020 (2020-09-29), XP081773493, * the whole document * ----- | 1-15 | |
| A | ZHENG QINGHE ET AL: "Spectrum interference-based two-level data augmentation method in deep learning for automatic modulation classification", NEURAL COMPUTING AND APPLICATIONS, SPRINGER LONDON, LONDON, vol. 33, no. 13, 19 November 2020 (2020-11-19), pages 7723-7745, XP037489472, ISSN: 0941-0643, DOI: 10.1007/S00521-020-05514-1 [retrieved on 2020-11-19] * the whole document * ----- | 1-15 | |

**TECHNICAL FIELDS SEARCHED (IPC)**

G01S
G06N
G06K

The present search report has been drawn up for all claims

| Place of search | Date of completion of the search | Examiner |
|---|---|---|
| Munich | 3 August 2021 | Reeck, Guido |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 16 2629

This annex lists the patent family members relating to the patent documents cited in  the above-mentioned European search report.
The members are as contained in the European Patent Office EDP file on
The European Patent Office is in no way liable for these particulars which are merely given for the purpose of information.

03-08-2021

| Patent document cited in search report | | Publication date | Patent family member(s) | | Publication date |
|---|---|---|---|---|---|
| US 2020044899 | A1 | 06-02-2020 | CN | 107124381 A | 01-09-2017 |
| | | | US | 2020044899 A1 | 06-02-2020 |
| | | | WO | 2018176889 A1 | 04-10-2018 |
| US 10003483 | B1 | 19-06-2018 | NONE | | |

EPO FORM P0459

For more details about this annex : see Official Journal of the European Patent Office, No. 12/82